# EUROPÄISCHE PATENTANMELDUNG

(11) **EP 0 903 562 A2**
(43) Veröffentlichungstag der Anmeldung: **24.03.1999**
(21) Anmeldenummer: 98117432.9
(22) Anmeldetag: 15.09.1998
(51) Int. Cl.: G01F 11/40

(54) **Spender für ein körniges oder pulverförmiges Nahrungsmittel, insbesondere Zucker- oder Kaffee-Spender**

(30) Priorität: 19.09.1997 DE 19741272; 28.11.1997 DE 19752790
(71) Anmelder: Cetoni Umweltechnologie-entwicklungsgesellschaft mbH, 94034 Passau (DE)
(72) Erfinder: Schlattl, Alice, D-94161 Rudertin (DE)
(74) Vertreter: Graf, Helmut, Dipl.-Ing.

(57) **Zusammenfassung**

Die Erfindung bezieht sich auf eine neuartige Ausbildung eines Spenders für ein körniges oder pulverförmiges Nahrungsmittel, insbesondere Zucker- oder Kaffee-Spender.

## Beschreibung

Die Erfindung bezieht sich auf einen Spender für ein körniges oder pulverförmiges Nahrungsmittel, insbesondere Zucker- oder Kaffee-Spender.

Aufgabe der Erfindung ist es, einen Spender aufzuzeigen, mit der eine bequeme und saubere Abgabe von Zucker oder Kandiszucker möglich ist.

Zur Lösung dieser Aufgabe ist ein Spender entsprechend dem Patentanspruch 1 oder 6 ausgebildet. Ein derartiger Spender gestattet bei einfacher und preiswerter Herstellung eine exakte dosierte Abgabe von Zucker.

Mit dem Spender gemäß Patentanspruch 6 ist erstmals ein Spender zur einfachen dosierten Abgabe von Kandiszucker geschaffen.

Der erfindungsgemäße Spender läßt sich in ansprechender Form herstellen. Insbesondere ist es auch möglich, daß das Gehäuse des Spenders zugleich die Verkaufsverpackung bildet.

Weiterbildungen der Erfindungen sind Gegenstand der Unteransprüche. Die Erfindung wird im folgenden anhand der Figuren näher erläutert. Es zeigen:
- Fig. 1 - 4: einen Zucker-Spender gemäß der Erfindung in einer ersten Seitenansicht, in einer um 90° gedrehten Seitenansicht in Unteransicht sowie in Draufsicht;
- Fig. 5 und 6: in vereinfachter Darstellung einen Schnitt durch den Spender der Figur 1 bei zwei unterschiedlichen Zuständen des Dosierschiebers;
- Fig. 7: in vereinfachter Darstellung einen Schnitt entsprechend der Linie I - I der Figur 5;
- Fig. 8 - 10: in Schnittdarstellung und in verschiedenen Positionen einen Spender für Kandiszucker;
- Fig. 11: im Schnitt eine weitere mögliche Ausführungsform des Kandis-Zuckerspenders;
- Fig. 12: einen Schnitt entsprechend der Linie II - II der Figur 11;
- Fig. 13 und 14: in Draufsicht sowie im Schnitt eine abgewandelte Ausführungsform eines runden Deckels z.B. für den Spender der Figuren 11 und 12;
- Fig. 15 und 16: eine Darstellung ähnlich Figur 8 von einer weiteren möglichen Ausführungsform des Kandis-Zuckerspenders;
- Fig. 17 und 18: Schnitte entsprechend der Linie III - III der Figuren 15 bzw. 16,
- Fig. 19 und 20: in Darstellung ähnlich den Figuren 6 und 7 ein Spender gemäß der Erfindung für die dosierte Abgabe von Pulver-Kaffee.

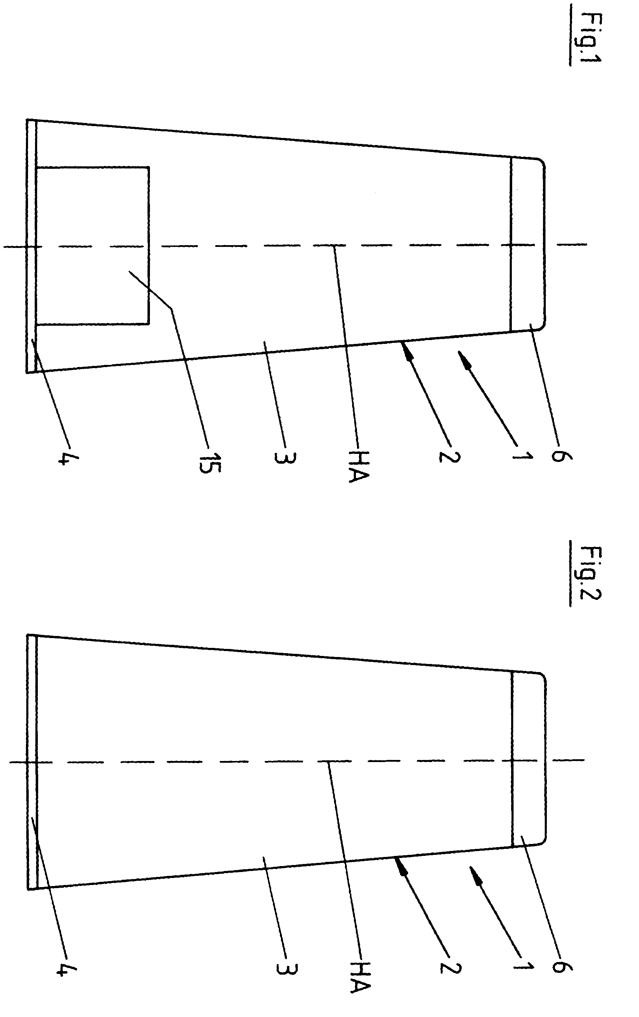

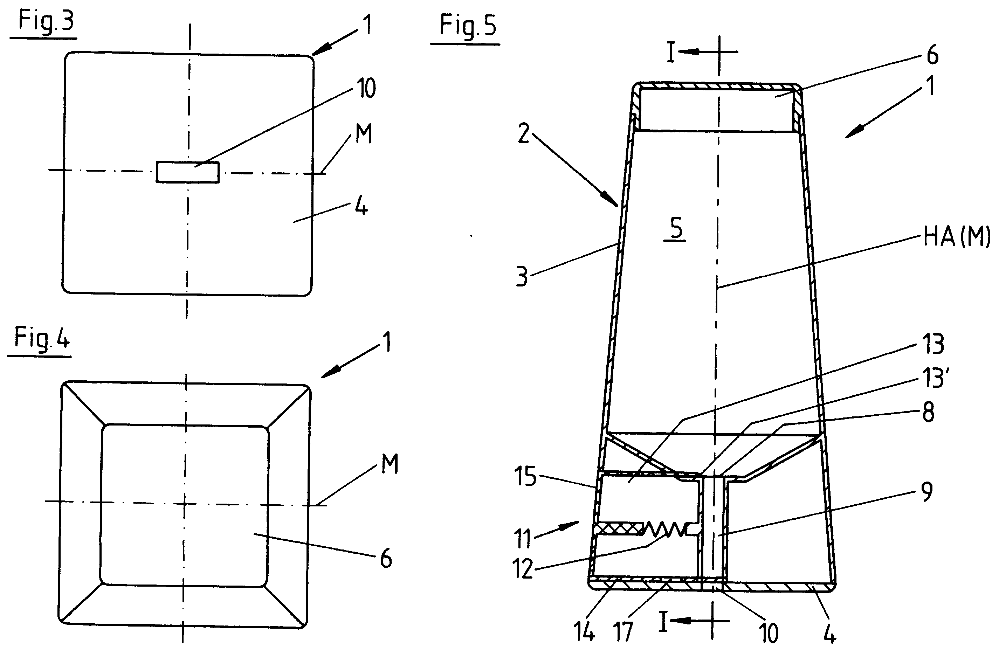

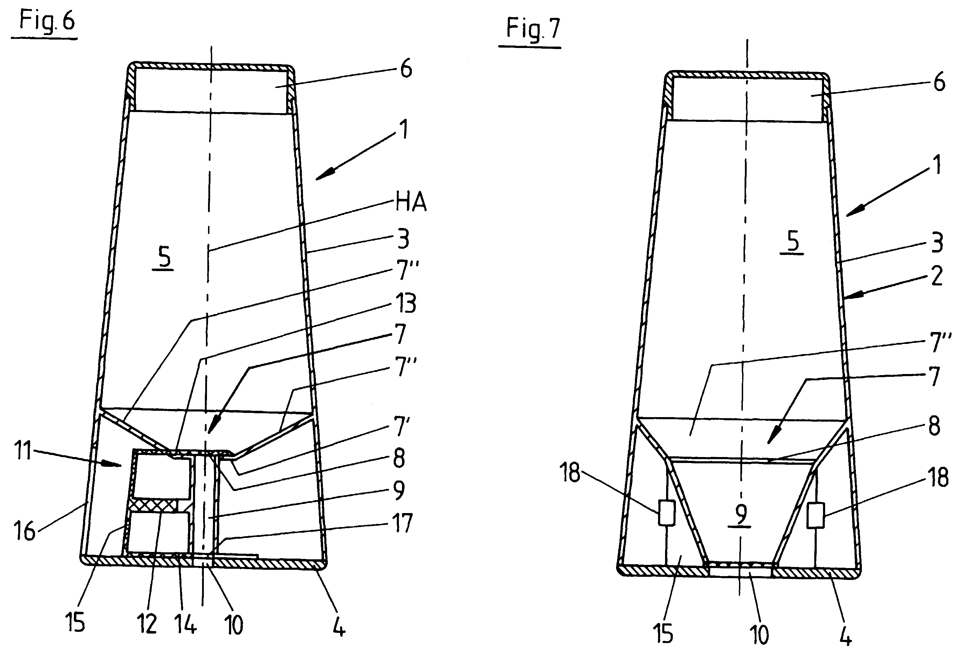

Die Figuren 1 - 7 zeigen in verschiedenen Darstellungen einen Spender 1 zur dosierten Abgabe einer vorgegebenen an Zucker. Der Spender besteht bei der dargestellten Ausführungsform aus einem pyramidenstumpfartig geformten Gehäuse 2, welches beispielsweise aus Kunststoff gefertigt ist, eine von vier aneinander anschließenden Wandabschnitten gebildete Umfangswand 3 und einen Boden 4 bildet. Das Gehäuse 2 bzw. dessen Innenraum 5 ist an der Gehäuseoberseite durch einen abnehmbaren Deckel 6 verschlossen. In Schnittebenen senkrecht zur Gehäusehochachse HA bzw. parallel zum Boden 4 besitzt das Gehäuse einen quadratischen Querschnitt, der sich zu der durch den Deckel 6 verschlossenen Oberseite hin verjüngt. Der Innenraum 5 des Spenders 1 ist unten durch einen Zwischenboden 7 begrenzt, der bei der dargestellten Ausführungsform trichterartig in Form eines flachen, sich nach oben hin erweiternden Pyramidenstumpfes ausgeführt ist, und zwar mit einem mittleren, parallel zum Boden und im Abstand von diesem angeordneten Boden-Abschnitt 7' und mit seitlichen, schräg nach oben verlaufenden Boden-Abschnitten 7'', die jeweils in die Umfangswand 3 übergehen bzw. mit dieser verbunden sind. Im mittleren Abschnitt 7' besitzt der Zwischenboden 7 eine rechteckförmige Öffnung 8, deren Längserstreckung in einer gedachten, die Mittel- bzw. Hochachse HA einschließenden, parallel zu zwei Seiten des Bodens 4 und in der Mitte zwischen diesen beiden Seiten verlaufenden Mittelebene M angeordnet ist. Die Öffnung 8 mündet in einen Dosierschacht 9, der sich bei der dargestellten Ausführungsform in der vorgenannten Ebene M trichterartig nach unten verengt (Figur 7), senkrecht zu der Ebene M einen gleichbleibenden Querschnitt aufweist (Fig. 5 und 6). Der Dosierschacht 9 mündet am Boden 4 in eine dort vorgesehene rechteckförmige Abgabeöffnung 10, deren Breite entsprechend der Ausbildung des Dosierschachtes 9 gleich der Breite der Öffnung 8 ist und deren Längserstreckung kürzer ist als die Längserstreckung der Öffnung 8. Im Gehäuse 2 ist unterhalb des Zwischenbodens 7 ein Dosierschieber 11 in einer Achsrichtung senkrecht zur Hochachse HA und senkrecht zur Längserstreckung der Öffnungen 8 und 10 verschiebbar vorgesehen, und zwar gegen die Wirkung einer Druck- oder Rückstellfeder 12, die als gewendelte Feder dargestellt ist, aber auch andersartig ausgebildet sein kann, beispielsweise als Blattfeder aus elastischen Material, beispielsweise aus dem Kunststoffmaterial des Gehäuses 2. Der Dosierschieber 11 besteht im wesentlichen aus zwei Schenkeln, und zwar dem oberen Schenkel 13 und dem unteren Schenke 14 sowie aus einem diese Schenkel miteinander verbindenden Wandabschnitt 15. Der Dosierschieber 11 ist weiterhin so ausgebildet und angeordnet, daß der obere Schenkel 13 in einer Ebene senkrecht zur Hochachse HA liegt und durch einen Schlitz im Zwischenboden 7 in den Innenraum des Spenders 5 derart hineinreicht, daß der Schenkel 13 mit seinem dem Wandabschnitt 15 entfernt liegendem Bereich auf der dem Deckel 6 zugewandten Oberseite des Abschnittes 7' des Zwischenbodens 7 gleitend aufliegt. Weiterhin ist der Schenkel 13 so ausgebildet, daß bei nichtaktiviertem Dosierschieber 11 der Schenkel 13 mit seinem freien Rand 13' seitlich von der Öffnung 8 liegt, d.h. diese Öffnung durch den Schenke 13 nicht abgedeckt ist.

Der Schenkel 14 reicht mit seinem dem Wandabschnitt 15 entfernt liegenden Bereich durch einen Schlitz in den Dosierschacht 9 hinein, und zwar derart, daß die Abgabeöffnung 10 bei nichtbetätigtem Dosierschieber (Figur 5) durch den Schenkel 14 verschlossen ist. Bei nicht betätigtem Dosierschieber 11 liegt der Wandabschnitt 15 fluchtend mit der Umfangswand 3 des Gehäuses 2 und verschließt eine in dieser Umfangswand für den Dosierschieber 11 vorgesehene Öffnung 16.

Der Dosierschieber 11 ist aus der in der Figur 5 dargestellten nicht betätigten Stellung gegen die Wirkung der Feder 12 in eine betätigte Stellung bewegbar, in der die Öffnung 8 durch den Schenkel 13 verschlossen und die Abgabeöffnung 10 durch eine im Schenkel 14 vorgesehene Öffnung 17 geöffnet ist.

Die Arbeitsweise des Spenders 1 ist, daß bei mit Zucker gefülltem Innenraum 5 und bei nicht betätigtem Dosierschieber 11 sich der Dosierschacht 9 mit einer bestimmten Menge an Zucker füllt. Wird nun der Dosierschieber 11 betätigt, so wird mit dem Schenkel 13 die Öffnung 8 des Dosierschachtes 9 verschlossen, bevor der Dosierschacht 9 über die Öffnung 17 zur Abgabeöffnung 10 hin freigegeben wird. Im betätigtem Zustand des Dosierschiebers 11 wird dann die durch das Volumen des Dosierschachtes 9 genau dosierte Menge an Zucker an der Abgabeöffnung 10 abgegeben.

Der Spender 1, insbesondere auch die zur dosierten Abgabe notwendigen Elemente sind einfache Formteile, die preiswert gefertigt werden können. Weiterhin besteht die Möglichkeit, zumindest das Gehäuse 2 mit dem Deckel 6 als Verkaufsverpackung aus einem hierfür geeigneten Material, beispielsweise aus Karton zu fertigen. Der Dosierschieber 11 ist durch die in die Schlitze eingreifenden Schenkel 13 und 14 ausreichend im Gehäuse 2 geführt und durch Anschläge 18 gegen ein unerwünschtes Herausrutschen aus dem Gehäuse bzw. der Öffnung 16 gesichert.

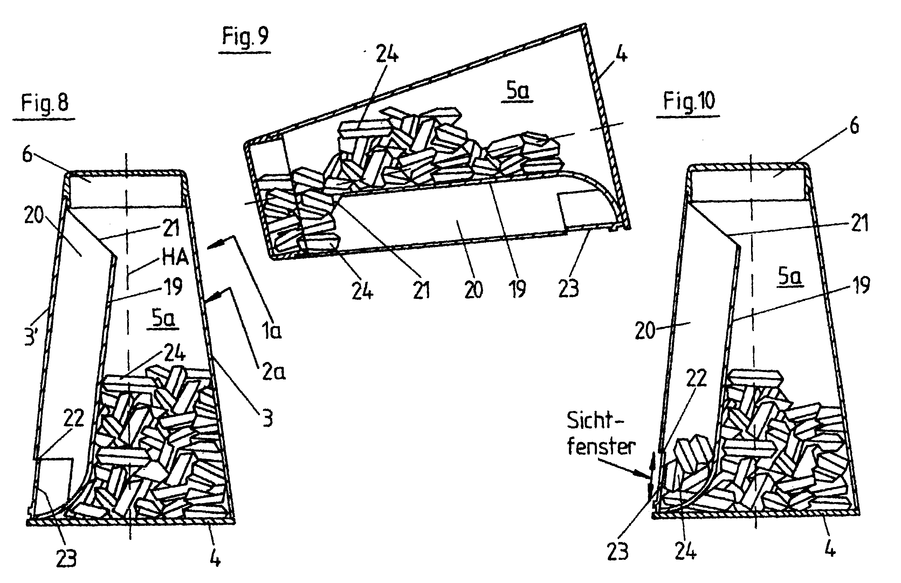

Die Figuren 8 - 10 zeigen als weitere Ausführungsform einen Spender für grobkörniges Material, nämlich für Kandiszucker. Dieser Spender 1a besteht wiederum aus einem dem Gehäuse 2 entsprechendem Gehäuse 2a mit dem verschließbaren Deckel 6 an der Oberseite des Gehäuses. Anstelle des Zwischenbodens 7 ist im Inneren des Gehäuses eine Zwischenwand 19 vorgesehen, die entlang einer Umfangsseite 3' der Umfangswand 3 einen Kanal 20 bildet, der mit seiner Längserstreckung in einer die Hochachse HA einschließenden und senkrecht zu dem Umfangswandabschnitt 3' verlaufenden gedachten Ebene angeordnet ist. Der Kanal 20 ist an seiner Oberseite in der nähe des Deckels 6, aber von diesem beabstandet bei 21 offen, wobei diese Öffnung 21 in einer Ebene liegt, die einen spitzen Winkel, beispielsweise einen Winkel von 45° mit der Hochachse HA einschließt, der sich zur Oberseite des Spenders 1a hin öffnet. Im Bereich des Bodens 4 ist die Zwischenwand 19 so geformt, daß dort der Kanal 20 an der von der Zwischenwand 19 gebildeten Seite konvex gekrümmt ist. Weiterhin ist im Bereich des Bodens 4 an dem Umfangswandabschnitt 3' eine Abgabeöffnung 21 für den Kanal 20 vorgesehen, die durch einen als Sichtfenster ausgebildeten Schieber 22 verschließbar ist.

Die Wirkungsweise des Spenders 1a ist derart, daß der Innenraum 5a bis zu einem Niveau unterhalb der Öffnung 21 des Abgabeschachtes 20 mit Kandiszucker 24 gefüllt ist (Fig. 8). Zur Entnahme einer bestimmten Menge an Kandiszucker 24 wird der Spender entsprechend der Figur 9 zunächst so gekippt, daß einige Kandiszucker 24 durch die Öffnung 21 in den Abgabeschacht 20 gelangen. Anschließend wird der Spender entsprechend Fig. 10 wiederum in die aufrechte Stellung gebracht. Durch Öffnen der Abgabeöffnung 22 bzw. des Schiebers 23 kann dann die gewünschte Anzahl an Kandiszuckerstücken 24 entnommen werden.

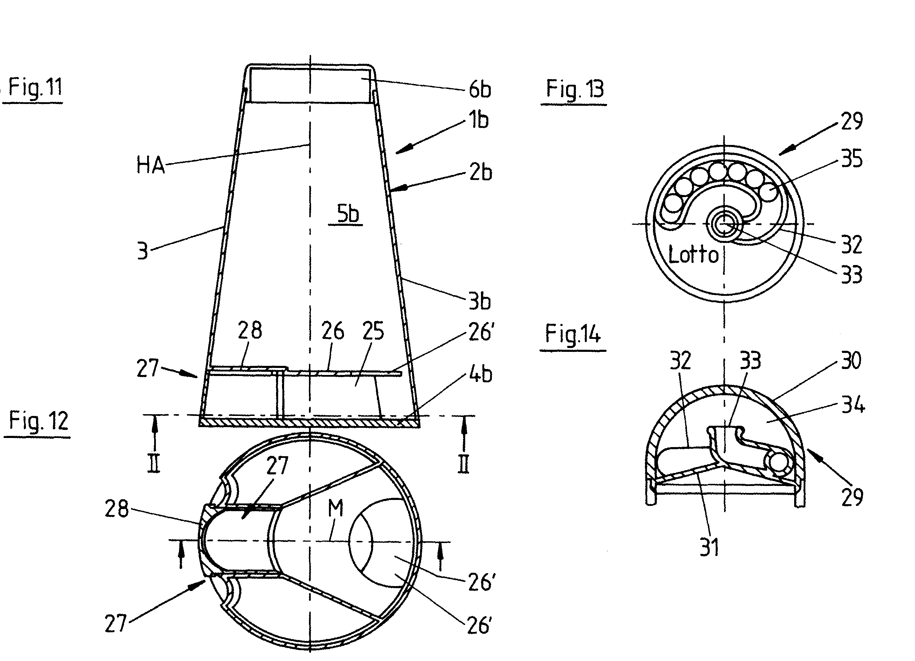

Die Figuren 11 und 12 zeigen als weitere mögliche Ausführungsform einen Spender 1b mit rundem, kegelstumpfförmigen Gehäuse 2b, bei dem anstelle des Abgabeschachtes 20 ein Abgabeschacht 25 im Innenraum des Gehäuses unmittelbar über dem dortigen Boden 4b gebildet ist, und zwar durch eine Zwischenwand 26, die parallel und im Abstand vom Boden 4b vorgesehen ist und im Bereich der Umfangswand 3b des kegelstumpfförmigen Gehäuses 2b eine Öffnung 26' bildet, über die der Abgabeschacht mit dem Innenraum 5b des Spenders in Verbindung steht. An der der Öffnung 26' gegenüberliegenden Seite des Gehäusequerschnittes ist der Abgabeschacht offen und bildet dort eine Abgabeöffnung 27, die durch einen radial zur Hochachse HA verschiebbaren Schieber geöffnet und geschlossen werden kann. Im geöffneten Zustand des Schiebers 28 steht dieser über dem Umfang des Gehäuses 2b vor und bildet eine zur Oberseite des Spenders hin offene, ansonsten aber geschlossene Öffnung, aus der dann eine bestimmte Anzahl an Kandiszuckerstücken 24 entnommen werden kann.

Die Arbeits- oder Verwendungsweise des Spenders 1b entspricht derjenigen des Spenders 1a, d.h. durch entsprechendes Kippen des Spenders wird zunächst eine bestimmte Anzahl an Kandiszuckerstücken 24 durch die Öffnung 26' in den Abgabeschacht 25 eingebracht, und zwar in der Form, daß sich eine bestimmte Anzahl an Kandiszuckerstücken 24 in dem geöffneten Schieber 28 befindet und dort entnommen werden kann.

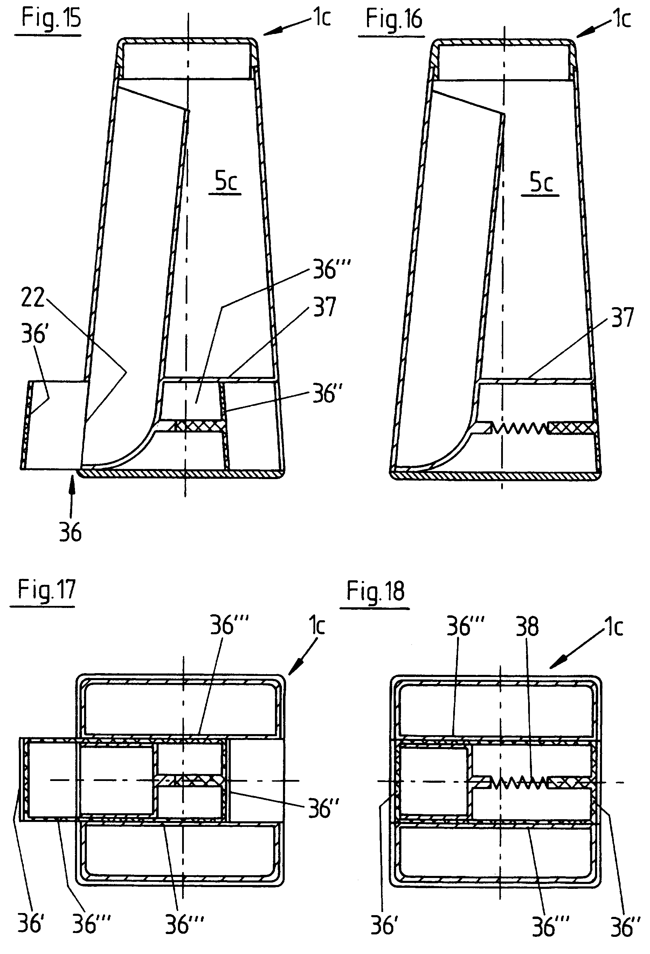

Die Figuren 13 und 14 zeigen noch eine weitere, mögliche Ausbildung eines Deckels 29, der anstelle des einfachen Deckels, beispielsweise des Deckels 6b beim Spender 1b verwendet werden kann. Der Deckel 29 besteht aus einem gewölbten, aus glasklarem Kunststoff hergestellten Deckelteil 30 und aus einem den Innenraum dieses Deckelteils an der Unterseite abschließenden Zwischenboden 31. Auf dem Zwischenboden 31 ist ebenfalls aus einem durchsichtigen Material ein rohrartiger Schneckengang 32 gebildet, welcher an einem Ende in der Mitte des Deckels 29 eine Öffnung 33 aufweist und am anderen Ende verschlossen ist. In dem Raum 34 zwischen dem Deckelteil 30 und dem Zwischenboden 31 sind eine Vielzahl von Kugeln 35 vorgesehen, die beispielsweise numeriert oder durch Farbgebung unterschiedlich gekennzeichnet sind. Bei dem als Geschicklichkeitsspiel ausgebildeten Deckel 29 geht es dann darum, eine bestimmte Anzahl von Kugeln 35 in den Schneckengang 32 durch die Öffnung 33 einzubringen.

Die Figuren 15 - 18 zeigen als weitere mögliche Ausführungsform der Erfindung einen Spender 1c, der in gleicher Weise wie der Spender 1a für Kandis-Zucker bestimmt ist und sich von dem Spender 1a im wesentlichen dadurch unterscheidet, das als Verschluß für die Abgabeöffnung 22 ein Schieber 36 vorgesehen ist, der als Rechteckprofil mit vier aneinander anschließenden Abschnitten gebildet ist, nämlich mit dem Abschnitt 36', dem diesen gegenüberliegenden Abschnitt 36'' und den beiden längeren Abschnitten 36'''. Der Schieber 36 ist unter einem Boden 37 des Spenderinnenraumes 5c derart angeordnet, daß die Abschnitte 36''' jeweils in Ebenen parallel zur Hochachse des Spenders 1c liegen und die Abschnitte 36' und 36'' in der in den Figuren 16 und 18 dargestellen Ausgangsstellung des Schiebers 26 fluchtend mit jeweils einer Seite des pyramidenstumpfartigen Gehäuses des Spenders 1c angeordnet sind, und zwar der Abschnitt 36' derart, daß er die Abgabeöffnung 22 verschließt und der Abschnitt 36'' an der gegenüberliegenden Seite. Durch eine Feder 38 ist der Schieber 36 in dieser Ausgangsstellung gehalten. Durch Verschieben des Schiebers gegen die Wirkung der Feder 38 kann die Abgabeöffnung 22 geöffent werden, so daß der Kandiszucker aus der Abgabeöffnung 22 bei geöffnetem Schieber (Figuren 15 und 17) nach unten herausfallen kann.

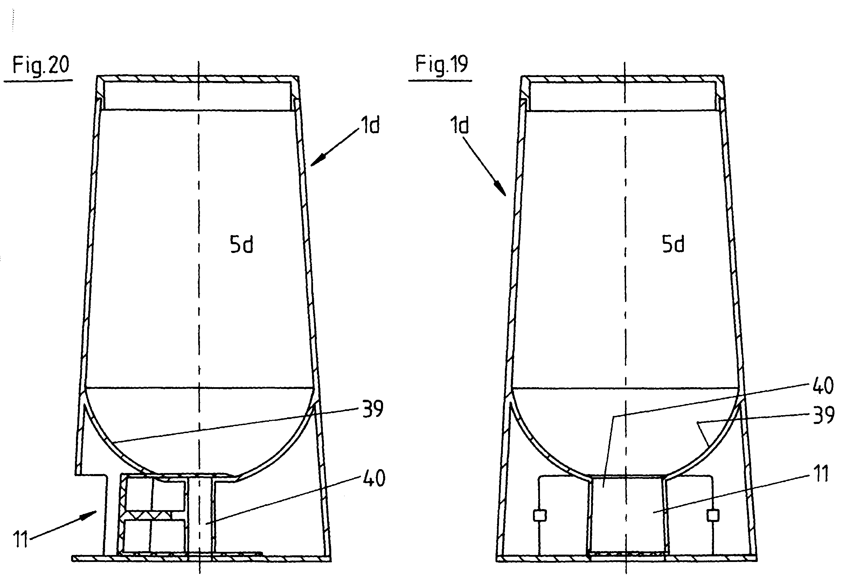

Die Figuren 19 und 20 zeigen als weitere mögliche Ausführungsform einen Spender 1d, der zur dosierten Abgabe von Pulver- oder Instant-Kaffee dient. Dieser Spender entspricht in seinem Aufbau im wesentlichen den Spender 1, allerdings mit dem Unterschied, daß anstelle des trichterartigen Zwischenbodens 7 ein zum Innenraum 5d konkav kugelkalottenartige gewölbter Zwischenboden 39 vorgesehen ist und der den Schacht 9 entsprechende Schacht 40 einen rechteckförmigen Querschnitt aufweist, der sich in der größeren Querschnittsachse leicht zum Boden 4d des Spenders 1d verbreitert. Durch diese Ausbildung des Zwischenbodens 39 und des Schachtes 40 ist der Spender 1d auch zur dosierten Abgabe von Pulver- oder Instant-Kaffee geeignet, d.h. zur Abgabe eines pulverförmigen Nahrungsmittels, welches eine leicht lebende Konsistenz aufweist.

### Bezugszeichenliste

- 1, 1a, 1b, 1c, 1d: Spender
- 2, 2a, 2b: Gehäuse
- 3, 3b: Umfangswand
- 3': Umfangswandabschnitt
- 4, 4b, 4d: Boden
- 5, 5a, 5b, 5c, 5d: Spenderinnenraum
- 6, 6b: Deckel
- 7: Zwischenboden
- 7, 7', 7'': Bodenabschnitt
- 8: Öffnung
- 9: Dosierschacht
- 10: Abgabeöffnung
- 11: Dosierschieber
- 12: Rückstellfeder
- 13: Schenkel
- 13': Freier Rand
- 14: Schenkel
- 15: Wandabschnitt
- 16: Öffnung
- 17: Schieberöffnung
- 18: Anschlag
- 19: Zwischenwand
- 20: Abgabeschacht
- 21: Öffnung
- 22: Abgabeöffnung
- 23: Schieber
- 24: Kandiszuckerstück
- 25: Abgabeschacht
- 26: Zwischenboden
- 27: Abgabeöffnung
- 28: Schieber
- 29: Deckel als Geschicklichkeitsspiel
- 30: Deckelteil
- 31: Zwischenboden
- 32: Schneckengang
- 33: Schneckengangöffnung
- 34: Raum
- 35: Kugel
- 36: Schieber
- 36' - 36''': Abschnitt
- 37: Zwischenboden
- 38: Druckfeder
- 39: Zwischenboden
- 40: Schacht

## Patentansprüche

1. Spender für ein körniges oder pulverförmiges Nahrungsmittel, insbesondere Zucker- oder Kaffee-Spender, **gekennzeichnet** durch ein einen Spenderinnenraum (5) bildendes Gehäuse (2) und einer an einer Gehäuseunterseite vorgesehenen Abgabeöffnung (10) zur dosierten Abgabe, durch wenigstens einen im Gehäuse (2) gebildeten Dosierschacht (9), der mit der Abgabeöffnung (10) in Verbindung steht und über eine Dosierschachtöffnung (8) mit dem Innenraum (5) des Spenders (1) in Verbindung steht, sowie durch Schieberelemente (13, 14), die manuell betätigbar sind, und zwar derart, daß in einem ersten Zustand der Schieberelemente das eine Schieberelement den Dosierschacht (9) an der Dosierschachtöffnung (8) zum Spenderinnenraum hin öffnet und das andere Schieberelement (14) den Dosierschacht zur Abgabeöffnung (10) verschließt, und daß in einem zweiten Zustand der Schieberelemente (13, 14) diese den Dosierschacht (9) zum Innenraum (5) verschließen und zur Abgabeöffnung (10) hin freigeben.

2. Spender nach Anspruch 1, dadurch gekennzeichnet, daß die Schieberelemente Bestandteil eines gemeinsamen Dosierschiebers (11) sind.

3. Spender nach Anspruch 2, dadurch gekennzeichnet, daß die Dosierelemente Schenke eines im wesentlichen U- oder bügelförmigen Dosierschiebers (11) sind.

4. Spender nach einem der vorhergehenden Ansprüche, dadurch gekennzeichnet, daß im Inneren des Gehäuses (2) ein Zwischenboden (7) vorgesehen ist, an den sich über die Dosierschachtöffnung (8) der Dosierschacht anschließt.

5. Spender nach einem der vorhergehenden Ansprüche, dadurch gekennzeichnet, daß die Abgabeöffnung (10) in einem Boden (4) des Gehäuses (2) vorgesehen ist.

6. Kandiszucker-Spender, gekennzeichnet durch ein einen Spenderinnenraum (5b, 5c) zur Aufnahme des Kandiszucker bildendes Gehäuse (2a, 2b), durch einen im Inneren des Gehäuses (2a, 2b) gebildeten Abgabekanal (20, 27), der über eine Öffnung (21, 26') mit dem Spenderinnenraum (5a, 5b) in Verbindung steht, sowie durch eine an einem anderen Ende des Abgabekanals (20, 25) gebildete, durch ein Verschließelement (23, 28) verschließbare Abgabeöffnung (22, 27).

7. Spender nach Anspruch 6, dadurch gekennzeichnet, daß das Verschließelement ein Schieber ist.

8. Spender nach Anspruch 6 oder 7, dadurch gekennzeichnet, daß der Abgabekanal (20) sich im Inneren des Gehäuses (2a) von der Oberseite an die Unterseite des Gehäuses erstreckt und die Abgabeöffnung an der Unterseite bzw. am Boden (4) des Gehäuses (2a) vorgesehen ist.

9. Spender nach Anspruch 6 oder 7, dadurch gekennzeichnet, daß der Abgabekanal (25) im Bereich des Bodens (4b) des Gehäuses (2b) gebildet ist, und zwar beispielsweise zwischen einer Zwischenwand (26) und dem Boden (4b).

10. Spender nach einem der vorhergehenden Ansprüche, dadurch gekennzeichnet, daß das Gehäuse (2) pyramiden- oder pyramidenstumpfförmig oder kegel- bzw. kegelstumpfförmige ausgebildet ist.

11. Spender nach einem der vorhergehenden Ansprüche, dadurch gekennzeichnet, daß das Gehäuse (2, 2a, 2b) aus Kunststoff oder Karton gefertigt ist.

12. Spender nach einem der vorhergehenden Ansprüche, dadurch gekennzeichnet, daß das Gehäuse (2, 2a, 2b) Bestandteil einer Verkaufsverpackung ist.

13. Spender nach einem der vorhergehenden Ansprüche, dadurch gekennzeichnet, daß an der Oberseite des Gehäuses (2b) ein vorzugsweise abnehmbarer und beispielsweise als Spiel ausgebildeter Deckel (29) vorgesehen ist.
